# EUROPEAN PATENT SPECIFICATION

(11) **EP 1 004 480 B1**
(45) Date of publication and mention of the grant of the patent: **31.05.2006**
(21) Application number: 99500202.9
(22) Date of filing: 02.11.1999
(51) Int. Cl.: B60R 16/02

(54) **Wire-eye set**
Kabelöse- Vorrichtung
Dispositif d'oeillet pour câble

(30) Priority: 23.11.1998 ES 9802947 U
(43) Date of publication of application: 31.05.2000
(73) Proprietor: Mecanismos Auxiliares Industriales S.L., 43800 Valls, Tarragona (ES)
(72) Inventor: Jorda Teixido, Miquel, 43800 Valls (Tarragona) (ES)
(74) Representative: Primo de Rivera y Urquijo, Jose A.

(56) References cited:
- FR-A- 2 701 517
- US-A- 4 912 287
- US-A- 5 545 854

## Description

The present application for a Patent of Invention consists, as indicated in its title, in a "WIRE-EYE SET", whose novel characteristics of manufacturing, shaping and design fullfill the object for which it has been specifically designed with a maximum of safety and efficiency.

More specifically, the invention refers to a wire-eye set which is mounted in combination with a support and an over-molded plate, allowing in an automobile vehicle the passage of an electric wires hose from the passenger space to the motor compartment, in such a way that the passing of said wires forming a portion of the electric equipment and which enter through the interior of said support remains suitably fixed by the over-moulded support to the sheet or similar element separating such passengers space from the motor compartment, therefore avoiding that noises and vibrations generated in said compartment enter into said space, the invention is therefore applicable to every type of separation among different portions in the automotive sector.

There exist in the market and therefore can be considered as the State of the Art, a plurality of wire-eye elements which function is: situated same over one or several electric wires, clogging the hole, normally in a sheet, through which are passed these wires and also potecting same against damages or frictions and serve also as support and fixation of same. The fixation to said sheet is by screws or by deformation of the wire-eye.

The supports that can be considered as the state of the art are manufactured basicaly by rubber parts, over-moulded elements or an assembly of parts, all those mounted over the wires which adopt a configuration allowing the immobilization of said support on the sheet or element separating the different compartments of the vehicle.

Anyhow, the proliferation of services in the vehicle s interior has brought toghether an exaggerated increment of the electric circuits for same and with that the number of wires which are to pass from a compartment to another, and because of that the supports or wire-eye elements actually in the market don t fullfill sometimes the function for which are designed and cannot overcome the great difficulty provided by a wire s hose over the rigidity of the support itself and its immobilization on the wall or sheet separating said compartments, being the consequence of all that that the function of the wire-eye does not always makes possible the main and sole function of same, which is not allowing that passage in a vehicle of said vibrations, noises, gases and liquid elements.

Basically, the main functions to be provided by a wire-eye assembly are as follows:
- a) to clogg a round hole, oval or of any other geometric shape through which is passed an assembly of electric wires in such a way that the conditions of water, gas or noise tightness etc., are noticeably equivalent to the ones existing before drilling the hole.
- b) maintain and protect the electric installation electric wire s package in the area of the hole.

The main characteristic that is intended to patent in the present application is the fixation system that the wire-eye assembly incorporates for its fixation to the sheet in which the hole for passing the wires is provided.

The over-moulded body on the electric wires package is a plastic material (PVC-PU-TPI or other plastic resin) allowing giving a defined shape in the design and once shaped has a controlled elasticity, allowing a deformation with constant tension in order to act as a United States Patent No. US4912287, discloses a grommet for supporting a bundle of electric wires which passes a fixing hole formed in a partition panel The grommet comprises an elastic member and a rigid member to be assembled with the elastic member. The elastic member has a wire securing portion in which the bundle of the electrical wires is secured, a sealing lip to be in contact with the partition panel and a fitting portion having an outer periphery on which a concave portion is formed. The rigid member has a lock portion to be locked with the partition panel and a fitted portion to be fitted onto the fitting portion of the elastic member. The fitted portion has an inner periphery on which a convex portion to be engaged with the concave portion of the fitting portion of the elastic member when the elastic member is assembled with the rigid member is formed. The grommet can realize easy and stable composition of the elastic portion and the rigid portion with high sealability. Specifically discloses a wire-eye set formed by a moulded body surrounding an assembly or package of wires being mounted through a hole in a wall separating any two portions of a vehicle an which function is that of avoiding that the existence of such hole allows the transmission of noises, vibrations and gases from one to another of sad portions wherein the wire-eye assembly is formed with the moulded body formed by zones which is surrounded by semi-plates incorporating immobilization means and covering the moulded body and their exterior crown. gasket in the passage zones against liquids and gases, and in the passengers space as an anti-noise screen.

The plastic material being molded over the electric wires causes that it is adapted and adhered in such a way that forms with same a whole, leaving no interstice at all.

A rigid plastic plate, formed by twc portions or semi-plates, is molded togheter and in the inside in order to confer rigidity and allow the pressure fixation to the sheet (panel) where exists the hole intended to be clogged.

The two halves of the plate allow the mounting around the wires in a quick and simple way and allows creating a whole because of embeddinas fitting ones on the others conferring rigidity to the assembly.

These semi-plates are formed with several zones or functional areas, from which we point out the following
a) exterior round crown, slide, of pressure gasket. Between this and the sheet there is a thickness of elastic material, of the same body of the wire-eye plate which performs as a true gasket.
b) cylindric-prismatic zone guiding and positioning the wire-eye plate.
c) interior crown or joining area with the interior cylindric portion or thread. At the same time that carries the fixation clips, formed by protrusions designed to be elastic, allowing the auto-centered assembly and not allowing, in the other side, that the wire-eye comes out of its housing position.
d) cylindric portion which has in its surface the carvings or thread part by wich is done the joining-retention of the nut fixing the wire-eye plate to the sheet.
e) a rear-plate of similar shape, though greater than the hole, performs as anti-noise barrier, pressing over the plate of porous material with the same function mounted over the panel sheet.

The wire-eye assembly is formed with:
- an ever-moulded body,
- a nut,
- a plate.

The assembly object of the present invention is inclusive of a nut with several entries, 2 or 4, in such a way that the fixation is done with a rotation of 1/4 of a turn, as will afterwards be disclosed.

Said nut carries also elastic tongues whose function is that of insuring:
a) that the assanbly has been correctly done,
b) not allowing an accidental dismantling.

Over the rigid plastic plate is placed a separately supplied nut which produces the final and rigid fixation of said wire-eye plate to the separation sheet.

That nut may be, as per the characteristics of the electric installation and in order to ease the assembly:
a) in two symmetric portions, which are joined forming an assembly or sole nut by embeddings male and female causing that the two halves keep strongly joined,
b) open or split nut, carrying a slit allowing the passage among the package of electric wires or filaments without having to line up same through all the wires.

In the outside of said nut it carries protrusions in the shape of lobes, designed ergonomically, in order to ease the gripping, manipulation and thigthening without accidents risk (applicable to the three types of nuts).

The fixation or threading is obtained by applying the nut on the wire-eye plate and producing a rotation of approximately 1/4 of turn by which is heard a clic noise indicating correct operation .

Tongues situated in the interior portion of the nut and being elastically deformed because of interference with the pre-assembly clips are those producin the clic noise when returning to its normal position after overtaking said interference.

Also those result embedded with said clips which renders impossible an accidental dismantling. In fact, for a dismantling operation it s necessary to breack or permanently deform said tongues, all that with a considerable and predeterminated effort.

Other details and characteristics will be manifest through the reading of the description given herebelow, in which reference is made to the figures attached to this description where the above details are depicted in a rather schematic way. These details are given as an example, referring to a case of a possible practical embodiment, but is not limited to the details outlined; therefore this description must be considered from an illustrative point of view and with no limitations whatsoever.

There follows a detailed report of the several elements named in the present description: (10) wire-eye assembly, (11) semi-plate, (12) semi-nut, (13) rear plate, (14) noise tightness gasket, (15) ribs, (16) watertightness gasket, (17) cylindric portion, (18) wires package, (19) wires package wrapping, (20) wires, (21) pre-assembly clips, (22) thread slits, (23) center portion, (24) over-moulded body, (25) cylindric body, (25.1)protrusions, (26) skirt, (26.1) ribs, (27) tongue,(28) slits, (29) catch, (30) recesses, (31) interior crown, (32) exterior crown, (32.1) flange, (32.2) wings, (33) noise tightness gasket, (34) thread ridges, (35) tongues, (36) cavities, (37) extension, (38) ribs, (39) cylindric zone, (40) cylindric zone, (41) wall.
Figure 1 is an elevation front view of the semi-plate (11) seen at the interior face.
Figure 2 is an elevation front view of the semi-plate (11) seen from the outside.
Figure 3 is a section through 3-3' as per Figure 1.
Figure 4 is a perspective view of the semi-plate (11) faced with another semi-plate of same nature with joining possibilities through the tongues (35) and the cavities (36).
Figure 5 is a perspective view of the wire-eye assembly (10) formed with the union of two semi-plates (11) over-moulded and surrounded by the over-moulded body (24).
Figure 6 is an elevation front view by the interior face of the semi-nut (12).
Figure 7 is a plant bottom view of the semi-nut (12).
Figure 8 is a perspective view of two semi-nuts (12) with joining possibilities through the tongues (27) to be fitted in the slits (28).
Figure 9 is an elevation front view of the wire-eye assembly (10).
Figure 10 is an elevation cross section of the wire-eye assembly (10) including the two semi-plates (11) and the two semi-nuts (12) once assembled and surrounding the over-moulded body (24).

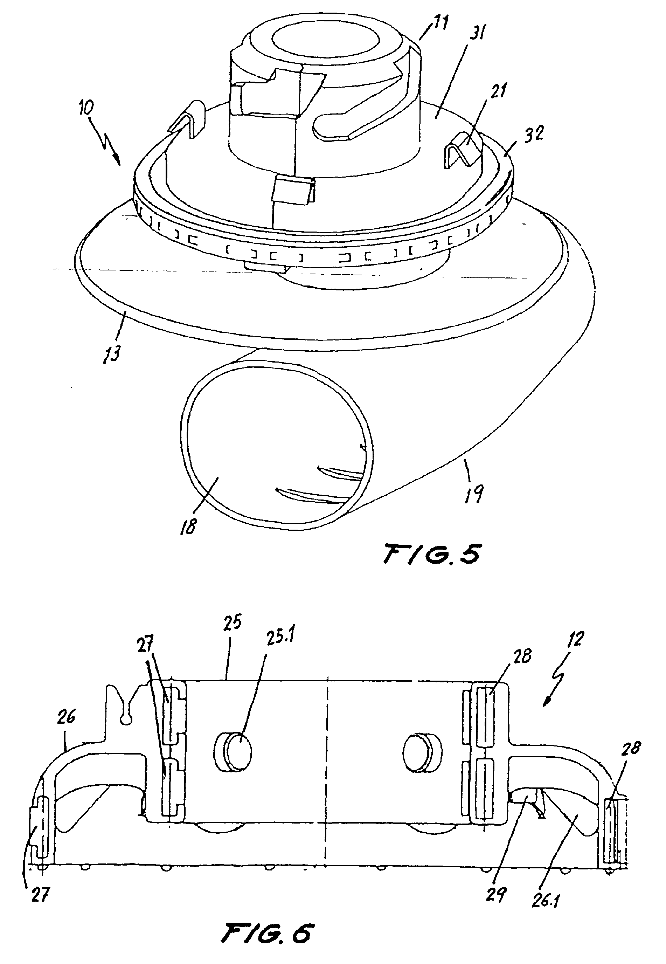

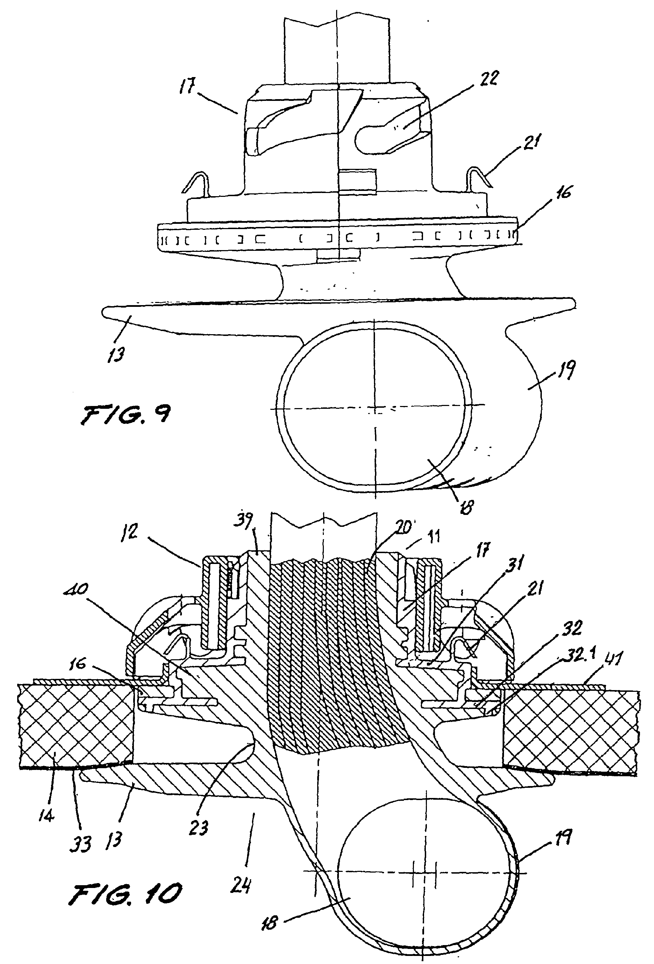

In one of the preferred embodiments of what is the object of the present application for a Patent of Invention and as can be seen in Figures 5 and 9, the wire-eye assembly (10) is formed by the union of two semi-plates (11), in such a way the the horizontal extension (37) and the interior crown (31) are covered by the over-moulded body (24), and at the same time, by means the over-moulding technique, is formed a cylindric zone (39) which inferior base extends horizontally as per a cylindric zone (40) of greater diameter which extends downwards as per the rear plate (13) which in turn adopts the shape of a wrapping (19), being the wires introduced by the interior of the cylindric zone (39) and coming out from the wrapping (19) forming already the wires package (18), see Figure 10.

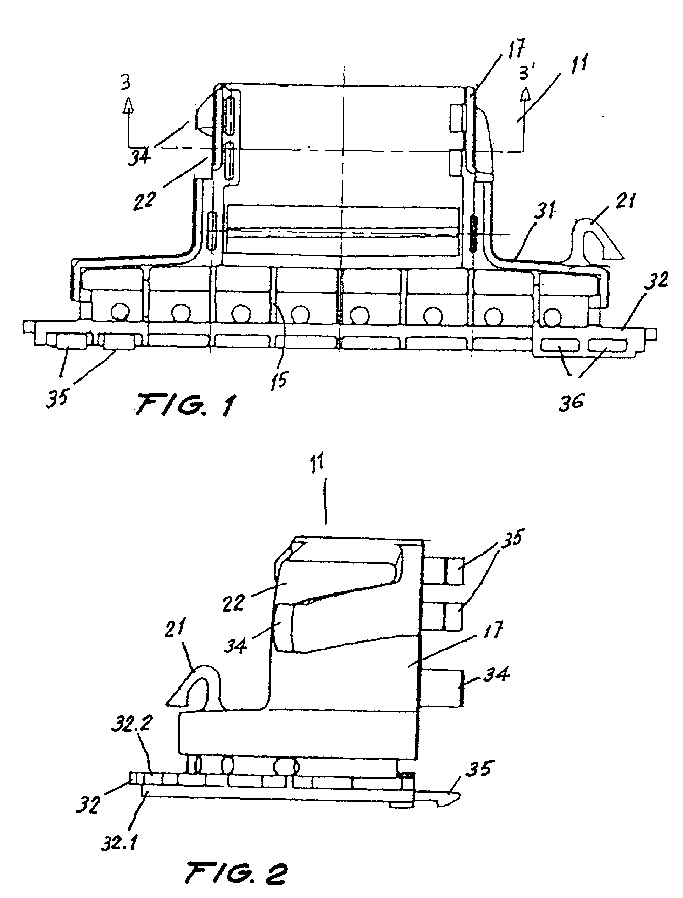

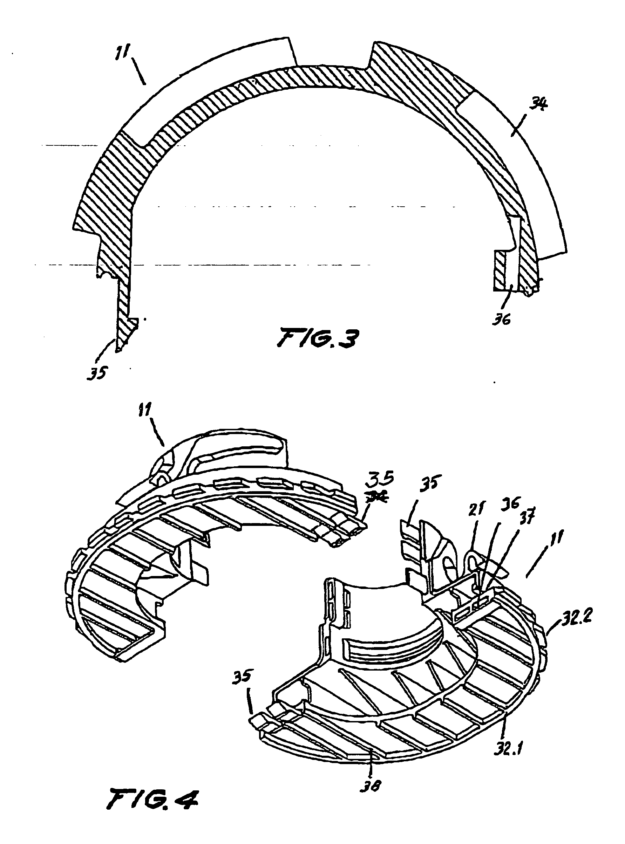

Over said over-moulded body (24) are mounted the semi-plates (11) which, as can be seen in Figures 1, 2, 3 and 4 shows an upper cylindric portion (17) which lower base extends as per an interior crown (31) which in turn extends to an exterior crown (32) which lower portion has the flange (32.1) whilst in the lateral surface of the exterior crown (32) shows at regular intervals the wings (32.2).

Over the interior crown (31) are at regular intervals the pre-assembly clips (21), which function is disclosed later.

In the interior portion of the semi-plate (11) there is a set of rigidifying ribs (15), being possible joining two semi-plates (11) since these have tongues (35) extending from the cylindric portion (17) and from the exterior crown (32) and which fit in cavities (36) situated in the cylindric portion (17) and in the exterior crown (32), see Figures 1, 2, 3 and 4.

The cylindric portion (17) of the semi-plate (11) is completed at the outside by thread ridges (34) and thread slits (22) allowing the assembly on said cylindric portion of a nut formed by semi-nuts (12).

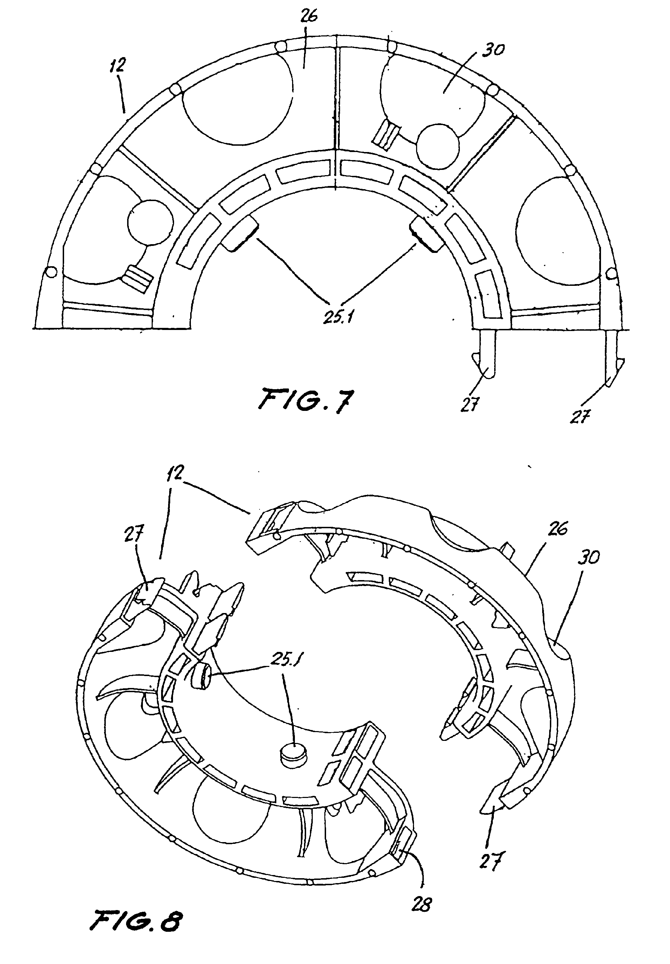

The semi-nuts (12), as can be seen in Figures 6, 7 and 8, are formed with a cylindric body (25) from which lateral surface extends a skirt (26) which exterior surface has recesses (30) whilst the interior portion of said skirt (26) is reinforced with ribs (26.1) and catches (29) which function is that of fitting in the pre-assembly clips (21).

The interior lateral surface of the cylindric body (25) is provided with protrusions (25.1) whose function is that of fitting into the thread slits (22) of the semi-plates (11).

The semi-nuts (12) are joined by the coupling of the tongues (27) into the slits (28), see Figures 6, 7 and 8.

The wire-eye assembly is assembled as per the detail of the cross section shown in Figure 1C, in which we can see how the nut is formed with semi-nuts (12) threads around the plate formed with semi-plates (11) with the help of the thread slits (22) found between the thread ridges (34), the protrusions (25.1) sliding through both, pressing the semi-plates against the over-moulded body (24), which covers the interior portion of the semi-plate (11), surrounding the wires (20), covering all its interior surfaces, fitting said over-moulded body (24) in the wall (41), in grace to the rear plate (13) which zeams over the noise tightness gasket (14) pressing at the same time the wall (41), in such a way that the wires entering into the cylindric zone (39) come out through the cavity surrounded by the wrapping (19). In some instances, it will be adopted the use of the plates formed on the basis of two semi-plates (11) and nuts formed by two semi-nuts (12) because it is easier to assembly.

## Claims

1. "Wire-eye set" of those formed by an over-moulded body (24) surrounding an assembly or package of wires (20) being mounted through a hole in a wall (41) separating any two portions, or spaces, of a vehicle and which function is that of avoiding that the existence of such hole allows the transmission of noises, vibrations and gases from one to the other of said portions, wherein the wire-eye set (10) is formed by said over-moulded body (24) which is surrounded by semi-plates (11), **characterized in that** said semi-plates (11) are surrounded in turn by semi-nuts (12), incorporating said semi-plates (11) and said semi-nuts (12) include thread and immobilization means and covering the over-moulded body (24) and an interior crown (31) said semi-plates (11), and **in that** the over-moulded body (24) has been over-moulded over said assembly or package of wires (20).

2. "Wire-eye set" according to Claim 1, **characterized in that** each semi-plate (11) has a semi-cylindrical configurationor portion (17) which lateral surface is provided with thread slits (22) and thread ridges (34), extending the semi-cylindrical portion (17) in other semi-cylindrical zone or interior semi-crown (31) which upper plane is fitted at regular intervals by pre-assembly clips (21), whilst in the lower face is extended in a new exterior semi-crown (32) having a flange (32.1) from which lateral surface wings (32.2) extend, perpendicularly in radial alignment wings, forming, when said semi-plates (11) are coupled, its respective exterior semi-crowns (32) said exterior crown.

3. "Wire-eye set" according to Claim 1, **characterized in that** each semi-nut (12) presents a semi-cylindrical body (25) from which lateral surface extends downwards a skirt (26) having in its lower portion ribs (26.1) and catches (29).

4. "Wire-eye set" according to Claim 3, **characterized in that** said thread means for coupling the semi-nuts (12) to the semi-plates (11) are formed by protrusions (25.1) extending perpendicularly from the lateral surface of said semi-cylindrical bodies (25) and fit into the semi-plates (11).

5. "Wire-eye set" according to Claim 3, **characterized in that** said immobilization means for immobilizing the semi-plates (11) with respect to the semi-nuts (12) are formed by pre-assembly clips (21) extending from the upper portion of said interior semi-crowns (31) of the semi-plates (11) and by said catches (29) provided in the interior portion of said skirts (26) of the semi-nuts (12).

6. "Wire-eye set" according to Claim 2, **characterized in that** each of the semi-plates (11) have tongues (35) extending from the semi-cylindrical portions (17) and from the exterior semi-crowns (32), and cavities (36) situated in the other part of the semi-cylindrical portions (17), said tongues (35) and cavities (36) being arranged to join the semi-plates (11) together by fitting the tongues of one of the semi-plates (11) into the cavities (36) of the other semi-plate (11), and viceversa.

7. "Wire-eye set" according to Claim 3, **characterized in that** each of the semi-nuts (12) have tongues (27) extending from the semi-cylindrical bodies (25) and from said skirts (26), and slits (28) provided also in the other part of the semi-cylindrical body (25) and in other parts of the skirts (26), said tongues (27)and slits (28) being arranged to join the semi-nuts (12) together by coupling the tongues of one of the semi-nuts (12) into the slits (28) of the other semi-nut (12), and viceversa.

## Patentansprüche

1. "Gesamtanordnung einer Kabeldurchführung" der Art, die aus einem abgeformten Körper (24) bestehen, der eine Gesamtanordnung oder ein Paket an Kabeln (20) umgibt, das durch ein Loch in einer Wand (41) montiert wird, die zwei beliebige Teile oder Räume eines Fahrzeugs voneinander trennt, deren Aufgabe es ist, zu vermeiden, dass das Bestehen dieses Lochs die Übertragung von Lärm, Schwingungen oder Gasen von einem dieser Teile zum anderen ermöglicht, wobei die Gesamtanordnung (10) der Kabeldurchführung aus dem genannten abgeformten Körper (24) besteht, der von Halbplatten (11) umgeben ist, **dadurch gekennzeichnet, dass** die genannten Halbplatten (11) ihrerseits von Halbmüttern (12) umgeben sind, die die genannten Halbplatten (11) enthalten und die genannten Halbmütter (12) Schraub- und Feststellmittel umfassen und den abgeformten Körper (24) überdecken sowie einen inneren Kranz (31) dieser Halbplatten (11) und **dadurch**, dass der abgeformte Körper (24) auf dieser Gesamtanordnung oder diesem Paket an Kabeln (20) abgeformt wurde.

2. "Gesamtanordnung einer Kabeldurchführung" nach Anspruch 1, **dadurch gekennzeichnet, dass** jede Halbplatte (11) einen halbzylindrischen Teil (17) oder Ausgestaltung aufweist, deren Seitenfläche mit Gewindeöffnungen (22) und Gewindevorsprüngen (34) versehen ist, wobei der halbzylindrische Teil (17) sich in einen weiteren innen liegenden halbzylindrischen Bereich oder Halbkranz (31) erstreckt, dessen obere Ebene in regelmäßigen Abständen mit Clips (21) zur Vormontage versehen sind, während die untere Seite sich in einen neuen, außen liegenden Halbkranz (32) erstreckt, der einen Rand (32.1) aufweist, von dem aus senkrecht in radialer Anordnung Flanschen (32.2) mit seitlicher Oberfläche abstehen, wobei diese Flanschen bei Ankoppeln der genannten Halbplatten (11) ihre jeweiligen äußeren Halbkränze (32) den genannten außen liegenden Kranz bilden.

3. "Gesamtanordnung einer Kabeldurchführung" nach Anspruch 1, **dadurch gekennzeichnet, dass** jede Halbmutter (12) einen halbzylindrischen Körper (25) aufweist, von dessen Seitenfläche aus sich eine Schürze (26) nach unten erstreckt, die an ihrem unteren Teil Rippen (26.1) und Manschetten (29) aufweist.

4. "Gesamtanordnung einer Kabeldurchführung" nach Anspruch 3, **dadurch gekennzeichnet, dass** die genannten Gewindemittel für das Koppeln der Halbmütter (12) an die Halbplatten (11) aus Erhebungen (25.1) bestehen, die sich senkrecht von der Seitenfläche der genannten halbzylindrischen Körper (25) aus erstrecken und die sich in die Halbplatten (11) einpassen.

5. "Gesamtanordnung einer Kabeldurchführung" nach Anspruch 3, **dadurch gekennzeichnet, dass** die genannten Feststellmittel für das Feststellen der Halbplatten (11) in Bezug auf die Halbmütter (12) aus Clips (21) für die Vormontage bestehen, die sich von dem oberen Teil der genannten innen liegenden Halbkränzen (31) der Halbplatten (11) aus über die genannten Manschetten (29) erstrecken, die in dem innen liegenden Teil der genannten Schürzen (26) der Halbmütter (12) angeordnet sind.

6. "Gesamtanordnung einer Kabeldurchführung" nach Anspruch 2, **dadurch gekennzeichnet, dass** jede der Halbplatten (11) Passfedern (35) aufweist, die sich von den halbzylindrischen Teilen (17) und von den außen liegenden Halbkränzen (32) erstrecken, sowie Vertiefungen (36), die in dem anderen Teil der halbzylindrischen Teilen (17) angeordnet sind, wobei diese Passfedern (35) und Vertiefungen (36) angeordnet sind, um die Halbplatten (11) **dadurch** miteinander zu verbinden, dass die Passfedern einer der Halbplatten (11) in die Vertiefungen (36) der anderen Halbplatten (11) eingepasst werden und umgekehrt.

7. "Gesamtanordnung einer Kabeldurchführung" nach Anspruch 3, **dadurch gekennzeichnet, dass** jede der Halbmütter (12) Passfedern (27) aufweist, die sich von den halbzylindrischen Körpern (25) und den genannten Schürzen (26) erstrecken, sowie Schlitze (28), die auch in dem anderen Teil des halbzylindrischen Körpers (25) und in anderen Teilen der Schürzen (26) vorgesehen sind, wobei die genannten Passfedern (27) und Schlitze (28) angeordnet sind, um die Halbmütter (12) **dadurch** miteinander zu verbinden, dass die Passfedern einer der Halbmütter (12) mit den Schlitzen (28) der anderen Halbmutter (12) gekoppelt werden und umgekehrt.

## Revendications

1. "Ensemble d'orifice pour câbles" du type formé par un corps (24) surmoulé qui entoure un ensemble ou paquet de câbles (20) qui est monté à travers un trou dans une paroi (41) qui sépare deux parties ou espaces quelconques d'un véhicule et dont la fonction es d'éviter que l'existence d'un tel trou ne permette la transmission de bruits, vibrations ou gaz de l'une à l'autre desdites parties, dans lequel l'ensemble (10) d'orifice pour câbles est formé par ledit corps (24) surmoulé, qui est entouré par des demi-plaques (11), **caractérisé en ce que** lesdites demi-plaques (11) sont entourées à leur tour par des demi-écrous (12) qui incorporent lesdites demi-plaques (11), et lesdits demi-écrous (12) incluent des moyens filetés et de blocage et couvrent le corps (24) surmoulé et une couronne (31) intérieure desdites demi-plaques (11), et **en ce que** le corps (24) surmoulé a été surmoulé sur ledit ensemble ou paquet de câbles (20).

2. "Ensemble d'orifice pour câbles" selon la revendication 1, **caractérisé en ce que** chaque demi-plaque (11) a une partie (17) ou configuration demi-cylindrique dont la surface latérale est pourvue de fentes (22) filetés et de reliefs (34) filetés qui étendent la partie (17) demi-cylindrique dans une autre zone demi-cylindrique ou demi-couronne (31) intérieure dont le plan supérieur est équipé à intervalles réguliers avec de clips (21) de pré-montage, tandis qu'à la face inférieure s'étend dans une nouvelle demi-couronne (32) extérieure qui a un rebord (32.1) à partir duquel s'étendent perpendiculairement en alignement radial des ailettes (32.2) de surface latérale, ces ailettes formant, lorsque l'on accouple lesdites demi-plaques (11), leurs demi-couronnes (32) respectives extérieures ladite couronne extérieure.

3. "Ensemble d'orifice pour câbles" selon la revendication 1, **caractérisé en ce que** chaque demi-écrou (12) présente un corps (25) demi-circulaire à partir de la surface latérale duquel s'étend vers le bas une jupe (26) qui a dans une partie inférieure des nervures (26.1) et des bagues d'étanchéité (29).

4. "Ensemble d'orifice pour câbles" selon la revendication 3, **caractérisé en ce que** les dits moyens filetés pour accoupler les demi-écrous (12) aux demi-plaques (11) sont formés par des protubérances (25.1) qui s'étendent perpendiculairement depuis la surface latérale desdits corps (25) demi-cylindriques et ils s'ajustent dans les demi-plaques (11).

5. "Ensemble d'orifice pour câbles" selon la revendication 3, **caractérisé en ce que** lesdits moyens de blocage pour immobiliser les demi-plaques (11) par rapport aux demi-écrous (12) sont formés par des clips (21) de pré-montage qui s'étendent depuis la partie supérieure desdites demi-couronnes (31) intérieures des demi-plaques (11) et par lesdites bagues d'étanchéité (29) disposées dans la partie intérieure desdites jupes (26) des demi-écrous (12).

6. "Ensembles d'orifice pour câbles" selon la revendication 2, **caractérisé en ce que** chacune des demi-plaques (11) a des languettes (35), qui s'étendent depuis les parties (17) semi-cylindriques et depuis les demi-couronnes (32) extérieures, et des cavités (36), situées dans l'autre partie des parties (17) demi-cylindriques, lesdites languettes (35) et lesdites cavités (36) étant disposées pour unir ensemble les demi-plaques (11) en ajustant les languettes d'une des demi-plaques (11) dans les cavités (36) de l'autre demi-plaque (11) et inversement.

7. "Ensemble d'orifice pour câbles" selon la revendication 3, **caractérisé en ce que** chacun des demi-écrous (12) a des languettes (27), qui s'étendent depuis les corps (25) demi-cylindriques et depuis lesdites jupes (26), et des fentes (28), prévues également dans l'autre partie du corps (25) demi-cylindrique et dans d'autres parties des jupes (26), lesdites languettes (27) et lesdites fentes (28) étant disposées pour unir ensemble les demi-écrouis (12) en accouplant les languettes d'un des demi-écrous (12) dans les fentes (28) de l'autre demi-écrou (12) et inversement.
